# FASCICULE DE BREVET EUROPEEN

(11) **EP 0 524 889 B1**
(45) Date de publication et mention de la délivrance du brevet: **09.11.1994**
(21) Numéro de dépôt: 92402147.0
(22) Date de dépôt: 24.07.1992
(51) Int. Cl.: B62B 1/26, B62B 3/10, B66F 9/18

(54) **Dispositif de serrage automatique, sur le mât d'un diable à fût, de l'élément de prise en suspension du fût**
Vorrichtung zur automatischen Klemmung des Fasshaltelementes an einer Handwagenstütze
Means for automatically damping a barrel holding element onto the standard of a trolley

(30) Priorité: 26.07.1991 FR 9109487
(43) Date de publication de la demande: 27.01.1993
(73) Titulaire: Lèbre, Charles Jean Pierre, F-91700 Sainte Geneviève des Bois (FR); Lèbre, Christophe, F-75013 Paris (FR)
(72) Inventeur: Lèbre, Charles Jean Pierre, F-91700 Sainte Geneviève des Bois (FR); Lèbre, Christophe, F-75013 Paris (FR)
(74) Mandataire: Hud, Robert

(56) Documents cités:
- FR-A- 2 610 271
- US-A- 2 541 613
- US-A- 2 616 577

## Description

L'invention concerne un diable à fût et, plus particulièrement, un diable à fût du type de celui décrit dans les documents FR-A-2 610 271 et FR-A-2 659 615 du même déposant.

Dans ce diable à fût connu, est prévu un dispositif de préhension du fût par crochetage de deux mâchoires agissant simultanément. L'une de ces mâchoires, en forme de crochet, agissant sur l'intérieur du diamètre supérieur du fût et l'autre mâchoire, inférieure, venant en appui vertical sous le relief circulaire de ce diamètre, évitant ainsi l'engagement de pattes ou d'un appui sous la circonférence inférieure du fût, entre celui-ci et le sol, seule disposition utilisée jusqu'alors sur tous les diables ou chariots connus conçus pour le déplacement des fûts.

Dans les documents FR-A-2 610 271 et FR-A-2 659 615 mentionnés ci-dessus, l'immobilisation du dispositif de préhension sur le mât du diable s'effectue par un serrage statique taré assuré par un excentrique solidaire d'un levier pour son actionnement manuel. Ce dispositif, s'il est d'un fonctionnement très efficace, nécessite le respect de tolérances relativement précises sur la section du tube constituant le mât ainsi que sur les deux éléments en coopération avec l'excentrique lors de l'application du serrage sur le mât du diable ce qui n'est pas évident lors du montage, et le passage du sommet de l'excentrique en fin de serrage étant nécessaire pour l'efficacité de ce dernier.

La présente invention a pour objet de remédier à cet inconvénient et elle propose à cet effet d'équiper le diable à fût connu du type mentionné ci-dessus d'un système d'immobilisation automatique, sur le mât du diable à fût, du dispositif de préhension à double mâchoire, ce système d'immobilisation automatique ne nécessitant pas l'intervention d'un dispositif de serrage à excentrique.

A cet effet, selon l'invention, le dispositif d'immobilisation comprend un organe de serrage de forme plane qui est monté prisonnier à l'intérieur de l'ensemble de chape sur lequel sont articulées les mâchoires et qui s'applique sélectivement contre le mât du diable sous l'effet d'un organe d'actionnement, cet organe d'actionnement étant porté par l'ensemble de chape de façon, lorsque la charge du fût est transférée aux mâchoires, à subir automatiquement un déplacement qui résulte en une force de poussée exercée sur ledit organe de serrage dans une direction sensiblement perpendiculaire au mât.

Selon une forme d'exécution, lesdites mâchoires de prise du fût sont articulées à une chape principale, alors que l'organe de serrage est monté dans une chape auxiliaire qui entoure le mât au-dessus de la chape principale et qui est reliée élastiquement à cette dernière par un ressort de compression. Une bielle est articulée à la chape principale et à la partie intermédiaire d'un levier de poussée dont une extrémité est articulée à la chape auxiliaire et engage l'organe de serrage. Le transfert du poids du fût sur la chape principale communique à la bielle un déplacement qui commande automatiquement l'application, par le levier de poussée agissant comme démultiplicateur d'effort, d'une force de poussée important sur l'organe de serrage en assurant l'immobilisation efficace du dispositif le long du mât.

La liaison par ressort de compression entre la chape principale et la chape auxiliaire crée entre ces deux chapes un déplacement relatif dans la direction assurant l'application de l'organe de serrage contre le mât. Une poussée exercée manuellement sur une poignée prolongeant le levier de poussée permet d'annuler l'action du ressort de compression de façon, en l'absence de charge, à pouvoir déplacer librement le dispositif le long du mât et régler ainsi la position des mâchoires en fonction de la hauteur du fût.

Selon une autre forme d'exécution du dispositif selon l'invention l'organe de serrage est monté prisonnier dans la chape sur laquelle sont articulées les mâchoires, et il présente une face plane destinée à s'appliquer contre le mât et une face opposée en forme de rampe qui coopère avec au moins un organe de roulement lié à la chape. Le transfert de la charge aux mâchoires provoque automatiquement un déplacement relatif de la rampe de l'organe de serrage et de l'organe de roulement dans la direction qui applique l'organe de serrage contre le mât et assure l'immobilisation du dispositif de préhension.

Un ressort agit sur l'organe de serrage pour déplacer celui-ci dans la direction provoquant son application contre le mât pour assurer une immobilisation statique du dispositif le long du mât en l'absence de charge. Un levier articulé sur la chape et coopérant avec l'organe de serrage est conçu pour recevoir, de la part de l'utilisateur, une poussée manuelle qui déplace l'organe le long du mât dans la direction inverse à l'action dudit ressort en annulant, en l'absence de charge, l'effet de serrage statique et en permettant le déplacement aisé du dispositif le long du mât.

Selon une variante, le dispositif selon l'invention permet la prise d'un fût qui est disposé sur une palette, lorsqu'il n'est pas possible d'appuyer la base du diable sur la face supérieure de la palette et que cette base doit alors être appuyée sur le sol. Dans ce cas, après saisie du fût et inclinaison du diable pour venir en appui sur ses roues, on peut assurer la descente au sol du fût par un glissement contrôlé de celui-ci le long du diable.

A cet effet, fixé à une hauteur convenable sur le mât du diable, au-dessus du dispositif de serrage automatique, se trouve un treuil agissant sur un élément enroulable tel qu'une sangle, une chaîne, une courroie crantée ou similaire auquel sont suspendus des organes du dispositif de serrage automatique. Ainsi, le transfert de la charge du fût sur les mâchoires provoque la tension de l'élément enroulable ce qui agit sur les organes de suspension pour neutraliser le serrage automatique et permettre, par déroulement du treuil, la descente contrôlée du fût jusqu'au sol, par coulissement le long du mât.

Pour bien faire comprendre le dispositif d'immobilisation automatique pour diable à fût, selon la présente invention, on en décrira ci-après, à titre d'exemples sans caractère limitatif, des formes d'exécution préférées en référence au dessin schématique annexé dans lequel :
la figure 1 est une vue en coupe longitudinale du dispositif de préhension à double mâchoire équipant un diable à fût du type décrit dans le document FR-A-2 610 271 muni d'une première forme d'exécution du système d'immobilisation selon la présente invention ;
la figure 2 est une vue en coupe longitudinale prise selon la ligne II-II de la figure 1 ;
la figure 3 est une vue partielle en coupe horizontale prise selon la ligne III-III de la figure 1;
la figure 4 est une vue en coupe longitudinale du dispositif de préhension à double mâchoire équipant un diable à fût du type décrit dans le document FR-A-2 610 271, muni d'une seconde forme d'exécution du système d'immobilisation selon la présente invention ;
la figure 5 est une vue en coupe horizontale prise selon la ligne V-V de la figure 4 ;
la figure 6 est une vue correspondant à la figure 4 du dispositif de préhension à double mâchoire, équipé d'une autre forme d'exécution du système d'immobilisation ;
la figure 7 est une vue en coupe horizontale prise selon la ligne VII-VII de la figure 6 ;
la figure 8 est une vue en élévation d'un diable à fûts équipé d'une variante du dispositif de la figure 1 permettant la prise d'un fût sur une palette ;
la figure 9 est une vue de côté du diable à fûts de la figure 8 ; et
la figure 10 est une vue de détail, à plus grande échelle, montrant le mécanisme de serrage automatique et de relâchement contrôlé équipant le diable des figures 8 et 9.

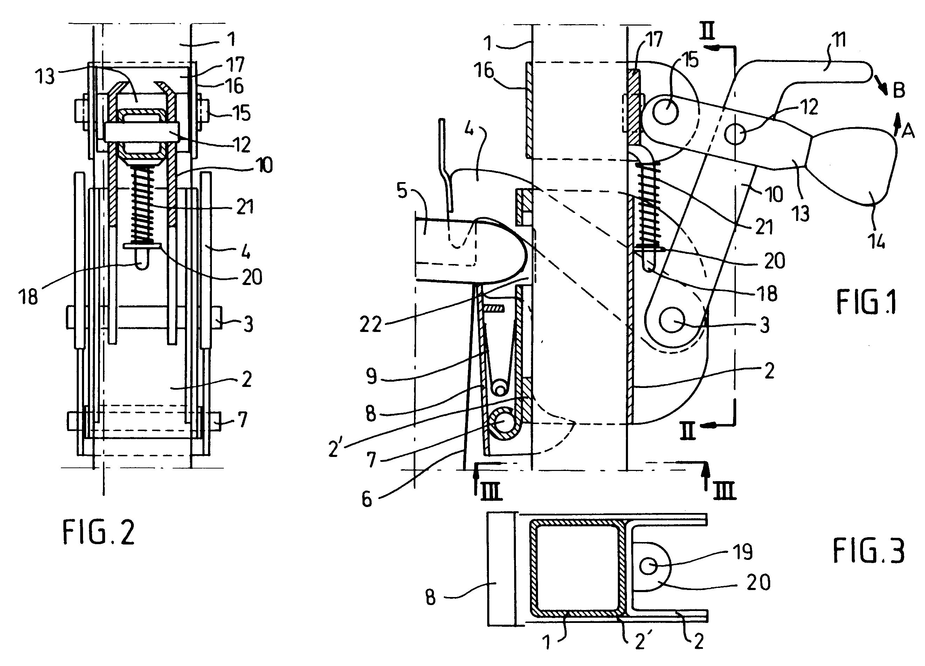

En référence aux figures 1 à 3 on a représenté un dispositif de préhension pour fût, équipant un chariot du type diable, du genre de celui décrit en détail dans le document FR-A-2 610 271. Comme on le voit, sur le mât vertical 1 du diable est monté en coulissement libre un ensemble de deux chapes 2,2′ qui entoure le mât 1 en formant un fourreau. La double chape 2, 2′ porte vers l'arrière un axe transversal 3 sur lequel est articulée la mâchoire supérieure 4 en forme de crochet qui s'engage (sous l'action d'un ressort de rappel non représenté) à l'intérieur du relief vertical 5 formé par le bord supérieur du fût 6. Sur la face avant de la double chape 2,2′, à sa partie inférieure, est articulée autour d'un axe 7 la mâchoire inférieure 8 qui est repoussée par le fût 6, contre l'action d'un ressort 9, jusqu'à ce que cette mâchoire vienne s'engager sous le relief 5.

Le système d'immobilisation du dispositif de préhension sur le mât 1 du diable, qui fait plus particulièrement l'objet de la présente demande de brevet, comprend selon la forme d'exécution représentée aux figures 1 à 3 une bielle 10 articulée à son extrémité inférieure sur la double chape 2,2′ autour de l'axe d'articulation 3 de la mâchoire 4. La bielle 10 se termine par une partie supérieure horizontale 11 et est articulée à sa partie intermédiaire, autour d'un axe 12, à la partie intermédiaire d'un levier 13. Ce levier 13 présente à une extrémité, disposée en regard de la partie 11 de la bielle 10, une poignée de prise manuelle 14 alors que son extrémité opposée comporte un trou d'articulation pour son montage oscillant, autour d'un axe 15, sur une chape auxiliaire 16, disposée au-dessus de la double chape 2,2′, qui coiffe le mât 1 pour pouvoir coulisser librement le long de celui-ci. L'extrémité du levier 13, opposée à la poignée 14, présente en déport vers le bas une excentration destinée à agir en levier démultiplicateur sur une plaque de serrage 17 montée prisonnière à l'intérieur de la chape 16, au voisinage du mât 1.

La liaison entre la plaque 17 et le dispositif de préhension à double mâchoire est assurée par une tige 18 solidaire de l'extrémité inférieure de la plaque 17 et qui s'engage dans une ouverture 19 d'une patte 20 en saillie sur la double chape 2,2′. Sur la tige 18 est monté un ressort 21 en appui à sa partie supérieure sur la base de la plaque 17 et en compression libre contre la patte 20.

On comprend que, le fût 6 à saisir reposant sur le sol, lorsqu'on vient crocheter les mâchoires 4 et 8 sur le relief supérieur 5 de ce fût et qu'on incline le mât 1 du diable vers l'arrière, la charge du fût est transférée à la double chape 2,2′ qui, par l'intermédiaire de la bielle 10, commande la poussée du levier 13 sur la plaque 17 et donc l'immobilisation immédiate, le long du mât 1, de l'ensemble constitué par les chapes 16 et 2,2′.

Le ressort 21 agit comme un ressort de pré-serrage en ayant pour rôle, lorsqu'aucune charge n'est appliquée aux mâchoires 4,8, de maintenir par serrage statique le dispositif en position le long du mât 1. Pour régler la position du dispositif le long du mât 1, de façon à s'adapter à la hauteur du fût 6 à saisir, il suffit à l'utilisateur d'agir en combinaison, avec une seule main, sur la poignée 14 et sur la partie 11 de la bielle 10, en appliquant sur ces deux éléments des forces de poussée dirigées respectivement selon les flèches A et B, pour annuler l'effet de pré-serrage. Ensuite, le simple fait de relâcher ces deux poignées en tirant légèrement vers le haut pour mettre en contact la mâchoire inférieure avec la base du relief circonférenciel du fût, assure la mise en oeuvre automatique et infaillible du dispositif de prise en suspension du fût sur le mât.

On sait qu'il existe de très nombreux modèles de fûts, faisant apparaître des différences très importantes dans la réalisation du pourtour en relief du diamètre extérieur des fûts. Afin de faciliter la conception et de diminuer les marges en jeu pour la prise de ce diamètre par les mâchoires, on a prévu (voir figure 1), dans la chape coulissante 2′ du dispositif de prise, de ménager un ajourage 22 avec un écartement relativement important entre les faces avant de la chape 2′ et du mât 1. Cet ajourage 22 permet une pénétration assez importante du diamètre extérieur du fût 6 qui, ainsi, vient prendre appui directement contre le mât 1.

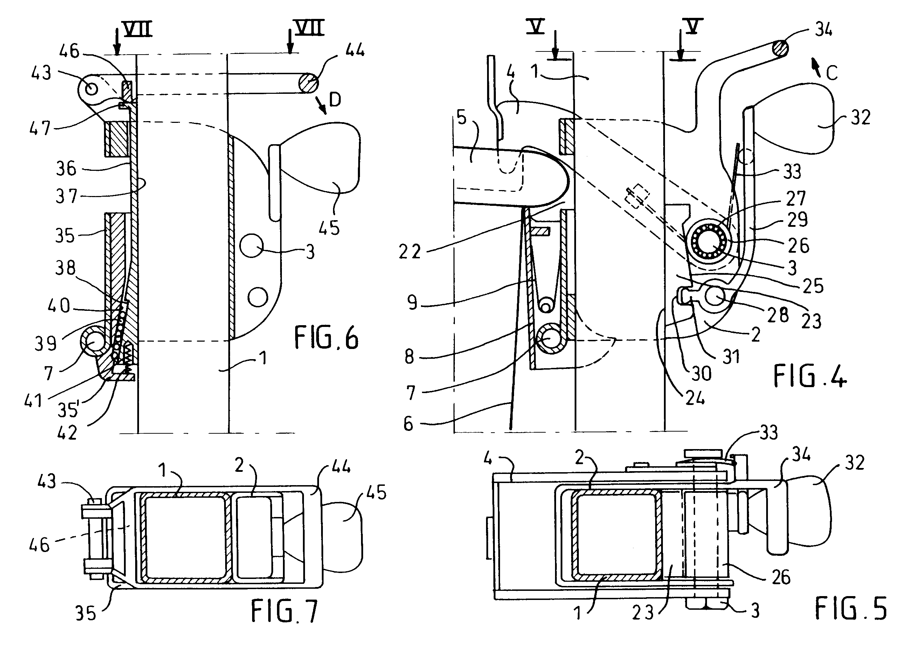

En référence aux figures 4 et 5 on a représenté une deuxième forme d'exécution du système d'immobilisation selon l'invention. Une pièce 23 est maintenue prisonnière à l'intérieur de la double chape 2 et présente une face 24 en contact avec le mât 1 et qui peut comporter un crantage pour minimiser sa surface d'appui en contact avec le mât, pour en augmenter la pression au mm2. La partie opposée de la pièce 23 forme une rampe 25 d'un angle pouvant varier entre 5 et 15° environ et qui coopère avec un galet 26, monté sur l'axe 3 par l'intermédiaire d'un roulement à aiguilles 27 pour pouvoir tourner de façon parfaitement libre. On comprend que, le fût 6 étant en appui sur le sol, lorsqu'on crochète les mâchoires 4,8 sur le relief 5 de ce fût et qu'on incline le mât 1 du diable vers l'arrière, le poids du fût est transféré à la chape 2 ce qui provoque un léger déplacement vers le bas du galet 26 sur la rampe 25 et donc, par effet de coin, le serrage automatique de la pièce 23 contre mât 1 et l'immobilisation du dispositif à double mâchoire 4,8 sur le mât 1.

A la partie inférieure de la chape 2 est monté pivotant, autour d'un axe 28, un levier 29 dont l'extrémité inférieure 30 s'engage dans une encoche 31 de la face arrière de la pièce 23 et dont l'extrémité supérieure est munie d'une poignée de prise manuelle 32. Un ressort en épingle 33, disposé autour de l'axe 3, agit d'une part sur la mâchoire en crochet 4, dans la direction maintenant cette mâchoire dans le relief 5 du fût 6, et d'autre part sur le levier 29 dans la direction écartant la poignée 32 de la chape 2. Un organe d'appui 34, solidaire de la chape 2, vient en regard de la poignée 32 au-dessus de celle-ci.

En l'absence de charge, le maintien en pression constante de la pièce 23 est obtenu au moyen du levier 29, qui sous l'effet du ressort 33, maintient le dispositif à double mâchoire 4,8 en arrêt sur le mât 1. Après avoir dégagé les mâchoires 4 et 8 de leur coopération avec le fût 6, il suffit à l'utilisateur de saisir dans sa main la poignée 32 et l'organe d'appui 34 et d'effectuer une action de serrage en poussant sur la poignée 32 dans la direction de la flèche C pour dégager la pièce conique 23 de son contact avec le mât 1 et le galet 26 et permettre (en l'absence de charge) un déplacement parfaitement libre du dispositif le long du mât 1, en lui permettant de s'adapter instantanément aux différentes hauteurs de fûts.

Dans l'autre forme d'exécution représentée aux figures 6 et 7, sur laquelle pourla clarté du dessin on n'a pas représenté les mâchoires 4 et 8, ni le fût 6, la chape 2 n'entoure le mât 1 que sur trois côtés dont la face arrière. Une autre chape 35 entoure également le mât 1 sur trois côtés, dont la face avant, et l'assemblage des chapes 2 et 35 constitue un fourreau coulissant sur le mât 1. Une pièce de serrage 36 est emprisonnée dans la chape 35 en présentant une face plane 37 disposée en regard de la face avant du mât 1. La face opposée de la pièce 36 présente une partie 38 en forme de rampe sur laquelle peut se déplacer un chemin d'aiguilles 39 en coopération avec un chemin parallèle 40 ménagé dans la chape 35. Le transfert, sur l'assemblage des chapes 2 et 35, de la charge du fût crocheté par les mâchoires (non représentées) du dispositif provoque un déplacement relatif de la chape 35 et de la pièce 36 provoquant le serrage de cette dernière contre le mât 1 et l'immobilisation de ce dispositif le long du mât.

A la partie inférieure de la pièce 36 est ménagé un logement borgne 41 à l'intérieur duquel est disposé un ressort de compression 42 dont l'extrémité fait saillie hors du logement 41 et s'appuie sur une partie 35′ de la chape 35. A l'extrémité supérieure de la chape 35 est articulée, autour d'un axe 43, une barre d'appui 44 qui vient en regard d'une poignée 45 solidaire de la chape 2. Une partie d'actionnement 46, portée par la barre d'appui 44, peut sélectivement venir engager l'extrémité supérieure 47 de la pièce 36.

On comprend que le maintien en pression constante de la pièce 36 à rampe conique entre le mât 1 et le lit d'aiguilles 39 est effectué par le ressort 42, ce qui assure l'immobilisation du dispositif le long du mât. La simple action de saisie par l'utilisateur de la barre d'appui 44 et de serrage manuel de celle-ci dans la direction de la flèche D contre la poignée 45 suffit, en l'absence de charge, pour dégager la pièce 36 de son contact avec le mât 1 et le chemin d'aiguilles 39, et permettre un déplacement parfaitement libre du dispositif le long du mât.

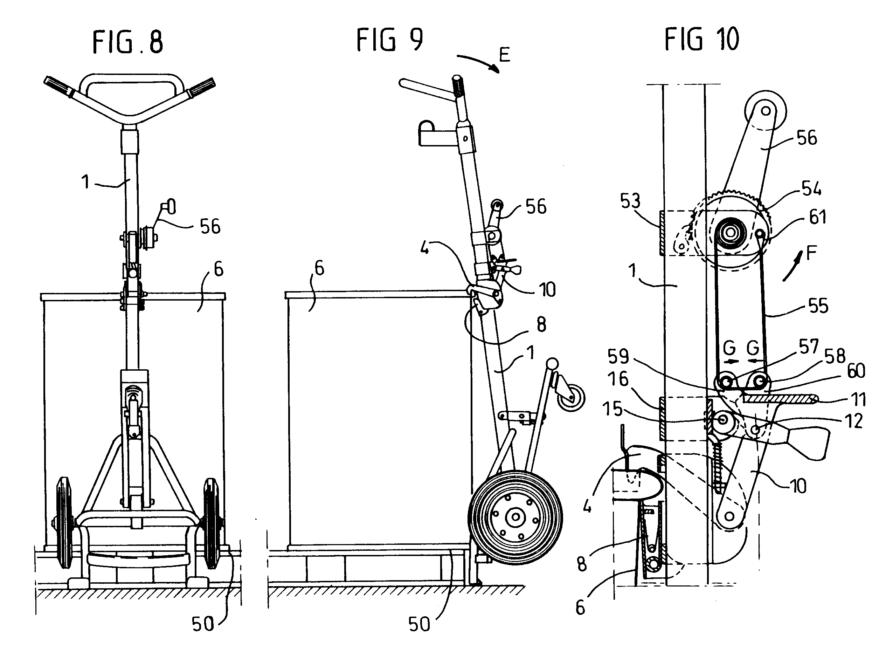

Aux figures 8 à 10 on a représenté un diable à fûts équipé du dispositif de serrage automatique des figures 1 à 3 et conçu pour la prise d'un fût 6 sur une palette 50, à une certaine hauteur par rapport au sol.

A cet effet sur le mât 1, à une hauteur appropriée au-dessus de la chape auxiliaire 16, est fixé un support 53 pour un treuil 54 sur le tambour duquel s'enroule une sangle 55 par actionnement d'une manivelle 56. La sangle 55 passe sous les axes transversaux 57 et 58 respectivement de deux chapes en regard 59, 60, et son extrémité libre 61 vient se fixer sur le support 53. La chape 59 est constituée par un prolongement de la bielle 10, et la chape 60 est articulée sur l'axe 12 d'articulation du levier 13 et s'appuie sur l'excentrique 15.

On comprend alors que, pour saisir le fût 6 qui est situé sur le bord de la palette 50, on place le diable avec sa base en appui sur le sol (de la façon représentée aux figures 8 et 10) pour que les mâchoires 8 et 4 assurent la saisie du bord du fût. Dès que, le mât 1 du chariot ayant été basculé dans le sens de la flèche E de la figure 9, la charge du fût a été transférée aux mâchoires 4, 8, la tension de la sangle 55 qui en résulte rapproche l'une de l'autre les chapes 59 et 60 (sens des flèches G-G de la figure 10) en rapprochant le levier 13 de la partie 11 de la bielle 10 ce qui provoque l'annulation de l'effet d'auto-serrage de la chape auxiliaire 16. Le treuil 54 assure alors la retenue du fût 6 en suspension et il suffit de tourner la manivelle 56 du treuil dans le sens de la flèche F de la figure 10 pour que le fût 6 descende à terre en toute sécurité dans le temps le plus court.

On comprendra que la description ci-dessus a été donnée à simple titre d'exemple, sans caractère limitatif, et que des adjonctions ou des modifications constructives peuvent y être apportées sans sortir du cadre de l'invention. On comprendra en particulier que le treuil 54 utilisé est un treuil connu, de fonctionnement classique, à retenue par friction et roue à rochet (ou tout moyen connu d'arrêt).

## Revendications

1. Diable à fût muni d'un dispositif de serrage automatique, sur le mât dudit diable à fût, d'un élément de prise en suspension du fût (6) constitué par une mâchoire supérieure (4) en forme de crochet destinée à agir sur l'intérieur du diamètre supérieur du fût (6) et une mâchoire inférieure (8) destinée à s'engager sous un relief circonférenciel (5) du fût (6) lesdites deux mâchoires (4,8) étant articulées sur un ensemble de chape de retenue (2,16) entourant le mât (1) du diable pour coulisser le long dudit mât, ledit dispositif comprenant un organe de serrage de forme plane (17, 25, 37) monté prisonnier à l'intérieur dudit ensemble de chape (2,16) et destiné à s'appliquer sélectivement contre le mât (1) du diable sous l'effet d'un organe d'actionnement, caractérisé en ce que ledit organe d'actionnement (10,13,26,39) est porté par ledit ensemble de chape de retenue (2,16) de façon, lorsque la charge du fût (6) est transférée auxdites mâchoires (4,8), à subir automatiquement un déplacement qui résulte en une force de poussée exercée sur ledit organe de serrage (17,25) dans une direction sensiblement perpendiculaire au mât (1).

2. Diable à fût selon la revendication 1, caractérisé en ce que ledit ensemble de chape comprend une chape principale (2) à laquelle sont articulées lesdites mâchoires (4,8) et une chape auxiliaire (16) entourant le mât (1) au-dessus de la chape principale (2) et reliée élastiquement à celle-ci, une bielle (10) étant articulée à la chape principale (2) et à la partie intermédiaire d'un levier de poussée (13) dont une extrémité est articulée à la chape auxiliaire (2) et engage l'organe de serrage (17) monté prisonnier dans la chape auxiliaire (16), l'action du poids du fût (6) sur la chape principale (2) communiquant à ladite bielle (10) un déplacement qui commande l'application automatique, par le levier de poussée (13) agissant comme démultiplicateur d'efforts d'une force de poussée importante sur l'organe de serrage (17) en assurant l'immobilisation efficace du dispositif le long du mât (1).

3. Diable à fût selon la revendication 2, caractérisé en ce que la liaison entre la chape principale (2) et la chape auxiliaire (6) s'effectue au moyen d'un ressort de compression (21) tendant, en l'absence de charge, à commander l'application de l'organe de serrage (17) contre le mât (1).

4. Diable à fût selon la revendication 3, caractérisé en ce que ladite bielle (10) et ledit levier (13) présentent des prolongements (11,14) en regard dont le serrage manuel l'un vers l'autre, en l'absence de charge, a pour effet de contre-balancer l'effet dudit ressort (21) et de permettre le déplacement aisé du dispositif le long du mât (1).

5. Diable à fût selon la revendication 1, caractérisé en ce que ledit organe de serrage (23,36) présente une face plane (24,37) s'appliquant contre le mât (1) et une face opposée formant rampe (25,38) coopérant avec au moins un organe de roulement (26,39) lié audit ensemble de chape (2), le transfert de la charge auxdites mâchoires (4,8) provoquant automatiquement un déplacement relatif dudit organe de serrage (23,36) et dudit organe de roulement (26,39) dans la direction appliquant l'organe de serrage (23,36) contre le mât (1).

6. Diable à fût selon la revendication 5, caractérisé en ce qu'il comprend un levier articulé (29,44) porté par l'ensemble de chape (2,35) et coopérant avec ledit organe de serrage (25,36) et un ressort (33,42) agissant sur ledit organe de serrage (25,36) dans la direction assurant son application contre le mât (1), une poussée exercée manuellement sur ledit levier (29,44) déplaçant l'organe de serrage (25,36) dans la direction inverse à l'action dudit ressort en permettant le déplacement aisé du dispositif le long du mât (1).

7. Diable à fût selon la revendication 6, caractérisé par un organe d'appui (34,45) solidaire dudit ensemble de chape (2) qui est disposé en regard de l'extrémité dudit levier articulé (29,44), ledit organe d'appui (34,45) facilitant le serrage manuel dudit levier articulé (29,44).

8. Diable à fût selon l'une quelconque des revendications précédentes, caractérisé par un ajourage (22) ménagé dans la face avant dudit ensemble de chape (2), au-dessus de ladite mâchoire inférieure (8), afin de ménager un passage pour le relief extérieur (5) de grand diamètre de l'extrémité supérieure du fût (6) à saisir.

9. Diable à fût selon l'une quelconque des revendications précédentes, caractérisé par un treuil (54) porté par le mât (1) du diable et commandant un élément enroulable (55) auquel est suspendu ledit organe d'actionnement (10, 13) de l'organe de serrage (17) de façon que le transfert de la charge du fût (6) aux mâchoires (4, 8) provoque une tension dudit organe enroulable (5) qui agit sur ledit organe d'actionnement (10, 13) pour annuler le serrage automatique de l'organe de serrage (17), ledit fût (6) se trouvant suspendu audit élément enroulable (55) alors que la commande du treuil (54) assure la descente contrôlée du fût (6) le long du mât (1).

10. Diable à fût selon l'une quelconque des revendications 2 à 4 et la revendication 9, caractérisé en ce que ledit organe d'actionnement est suspendu à l'élément enroulable (55) par un prolongement (59) de ladite bielle (10) et par une chape (60) articulée sur ledit levier de poussée (13) de façon que la tension dudit élément enroulable (55) provoque un déplacement relatif dudit prolongement (59) et de ladite chape (60) annulant le serrage de l'organe de serrage (17).

## Claims

1. Barrel trolley provided with a device for automatically clamping, onto the standard of said trolley, an element for holding the barrel (6) in suspension, consisting of an upper jaw (4) in the form of a hook intended to act on the interior of the upper diameter of the barrel (6) and a lower jaw (8) intended to engage on a circumferential relief (5) of the barrel, the two jaws (4, 8) being articulated on a retaining head assembly (2, 16) surrounding the standard (1) of the trolley to slide along said standard, said device comprising a flat clamping member (17, 25, 37) mounted in a captive manner at the interior of said head assembly (2, 16) and intended to be applied, selectively, against the standard (1) of the trolley under the effect of an actuating member, characterised in that said actuating member (10, 13, 26, 39) is brought by said retaining head assembly (2, 16), such that when the load of the barrel (6) is transferred to said jaws (4, 8) it is automatically subjected to a displacement which results in a pressing force exerted on the clamping member (17, 25) in a direction substantially perpendicular to the standard (1).

2. Barrel trolley according to Claim 1, characterised in that said head assembly comprises a principle head (2) to which said jaws (4, 8) are articulated, and an auxiliary head (16) surrounding the standard (1) below which the principle head (2) is connected in a resilient manner thereto, a link (10) being articulated to the principle head (2), and to the intermediate part of a pressing lever (13), one end of which is articulated to the auxiliary head (2) and engages the clamping organ (17) mounted in a captive manner in the auxiliary head (16), the action of the foot of the barrel (6) on the principle head (2) conferring on said link (10) a displacement which controls the automatic application, by means of the pressing lever (13) acting as a demultiplier of the forces of a significant pressing force on the clamping member (17), ensuring the effective immobilisation of the device along the length of the standard (1).

3. Barrel trolley according to Claim 2, characterised in that the connection between the principle head (2) and the auxiliary head (6) is performed by means of a compression spring (21), tending, in the absence of a load, to control the application of the clamping member (17) against the standard (1).

4. Barrel trolley according to Claim 3, characterised in that said link (10) and said lever (13) have opposite extensions (11, 14) such that the manual clamping of the one against the other, in the absence of a load, has, as its effect, counterbalancing the effect of said spring, and allowing easy displacement of the device along the standard (1).

5. Barrel trolley according to Claim 1, characterised in that said clamping member (23, 36) has a flat surface (24, 37) which is applied against the standard (1) and an opposite surface forming a ramp (25, 38) cooperating with at least one rolling member (26, 39) connected to said head assembly (2), the transfer of the load of the said sleeves (4, 8) automatically bringing about a relative displacement of said clamping member (23, 36) and said rolling member (26, 39) in the direction in which the clamping member (23, 36) is applied against the standard (1).

6. Barrel trolley according to Claim 5, characterised in that it comprises an articulated lever (29, 44) supported by the head assembly (2, 35) and cooperating with said clamping member (25, 36), and a spring (33, 42) acting on said clamping member (25, 36) in the direction ensuring the application thereof against the standard (1), a force manually exerted on said lever (29, 44) displacing the clamping organ (25, 36) in the reverse direction to the action of said spring, and allowing easy displacement of the device along the standard (1).

7. Trolley barrel according to Claim 6, characterised by a support member (34, 45) integral with said head assembly (2) which is disposed opposite the end of the said articulated lever (29, 44), said support member (34, 45) facilitating the manual clamping of said articulated lever (29, 44).

8. Barrel trolley according to any one of the preceding claims, characterised by a punched recess (22) provided in the front face of said head assembly (2) below said lower jaw (8), in order to provide a passage for the external relief (5) of large diameter of the upper end of the barrel (6) to be grasped.

9. Barrel trolley according to any one of the preceding claims, characterised by a winch (54) supported by the standard (1) of the trolley and controlling a windable element (55) from which said actuating member (10, 13) of the clamping member (17) is suspended in such a manner that the transfer of the load of the barrel (6) to the jaws (4, 8) produces a tension of said windable member (5) which acts on said actuating member (10, 13) to cancel the automatic clamping of the clamping member (17), said barrel (6) being located suspended from said windable element (55) in such a manner that the control of the winch (54) ensures the controlled descent of the barrel (6) along the standard (1).

10. Barrel trolley according to any one of Claims 2 to 4 and to Claim 9, characterised in that said actuating member is suspended from the windable member (55) by a projection (59) of said links (10) and by a head (60) articulated on said pressing lever (13) in such a manner that the tension of said windable element (55) produces a relative displacement of said projection (59) and said head (60), cancelling the clamping of the clamping member (17).

## Patentansprüche

1. Faßwagen mit einer Einrichtung zur automatischen Klemmung eines Elements zum Halten eines Fasses (6) an einer Handwagenstütze, das durch eine obere hakenförmige Backe (4), die auf das Innere des oberen Durchmessers des Fasses (6) einwirken soll, sowie durch eine untere Backe (8) gebildet ist, die unter einem Umfangsrelief (5) des Fasses (6) eingreifen soll, wobei die beiden Backen (4, 8) an einer Haltebügeleinheit (2, 16) angelenkt sind, die die Stütze (1) des Handwagens umgibt, um längs der Stütze zu gleiten, wobei die Einrichtung ein Klemmorgan (17, 25, 37) mit flacher Form aufweist, das im Inneren der Bügeleinheit (2, 16) gefangen angebracht und dazu bestimmt ist, unter der Wirkung eines Betätigungsorgans selektiv gegen die Stütze (1) des Handwagens zu drücken, dadurch gekennzeichnet, daß das Betätigungsorgan (10, 13, 26, 39) so von der Haltebügeleinheit (2, 16) getragen wird, daß es dann, wenn die Last des Fasses (6) zu den Backen (4, 8) übertragen wird, automatisch einer Verschiebung unterzogen wird, die in einer auf das Klemmorgan (17, 25) in einer im wesentlichen zur Stütze (1) senkrechten Richtung ausgeübten Schubkraft resultiert.

2. Faßwagen nach Anspruch 1, dadurch gekennzeichnet, daß die Bügeleinheit einen Hauptbügel (2), an den die Backen (4, 8) angelenkt sind, sowie einen Hilfsbügel (16) aufweist, der die Stütze (1) über dem Hauptbügel (2) umgibt und elastisch damit verbunden ist, wobei eine Stange (10) an dem Hauptbügel (2) und dem Zwischenteil eines Schubhebels (13) angelenkt ist, deren eines Ende an dem Hilfsbügel (2) angelenkt ist und an dem Klemmorgan (17) angreift, das in dem Hilfsbügel (16) gefangen ist, wobei die Wirkung des Gewichts des Fasses (6) auf dem Hauptbügel (2) der Stange (10) eine Verschiebung verleiht, die das automatische Anlegen einer hohen Schubkraft auf das Klemmorgan (17) durch den Schubhebel (13) steuert, der als Kraftuntersetzer wirkt, wobei die wirksame Fixierung der Einrichtung entlang der Stütze (1) gewährleistet ist.

3. Faßwagen nach Anspruch 2, dadurch gekennzeichnet, daß die Verbindung zwischen dem Hauptbügel (2) und dem Hilfsbügel (6) mittels einer Druckfeder (21) realisiert wird, die bei Abwesenheit einer Last dazu neigt, das Anlegen des Klemmorgans (17) gegen die Stütze (1) zu steuern.

4. Faßwagen nach Anspruch 3, dadurch gekennzeichnet, daß die Stange (10) und der Hebel (13) gegenüberliegende Ansätze (11, 14) aufweisen, deren manuelle Klemmung gegeneinander bei Abwesenheit einer Last bewirkt, daß die Wirkung der Feder (21) ausgeglichen wird und die einfache Verschiebung der Einrichtung entlang der Stütze (1) ermöglicht wird.

5. Faßwagen nach Anspruch 1, dadurch gekennzeichnet, daß das Klemmorgan (23, 36) eine ebene Seite (24, 37) aufweist, die gegen die Stütze (1) angelegt wird, sowie eine entgegengesetzte Seite aufweist, die eine Rampe (25, 38) bildet und mit wenigstens einem Rollorgan (26, 39) zusammenwirkt, das mit der Bügeleinheit (2) verbunden ist, wobei die Übertragung der Last zu den Backen (4, 8) automatisch eine Relativverschiebung des Klemmorgans (23, 26) und des Rollorgans (26, 39) in der Richtung bewirkt, die das Klemmorgan (23, 36) gegen die Stütze (1) anlegt.

6. Faßwagen nach Anspruch 5, dadurch gekennzeichnet, daß er einen Gelenkhebel (29, 44) aufweist, der von der Bügeleinheit (2, 35) getragen wird und mit dem Klemmorgan (25, 36) sowie einer Feder (33, 42) zusammenwirkt, die auf das Klemmorgan (25, 36) in der Richtung wirkt, die sein Anlegen gegen die Stütze (1) gewährleistet, wobei eine manuell auf den Hebel (29, 44) ausgeübte Schubkraft das Klemmorgan (25, 36) in der zur Wirkung der Feder umgekehrten Richtung verschiebt, wobei die leichte Verschiebung der Einrichtung längs der Stütze (1) ermöglicht wird.

7. Faßwagen nach Anspruch 6, gekennzeichnet durch ein Anlageorgan (34, 45), das mit der Bügeleinheit (2) fest verbunden und gegenüber dem Ende des Gelenkhebels (29, 44) angeordnet ist, wobei das Anlageorgan (34, 45) die manuelle Klemmung des Gelenkhebels (29, 44) ermöglicht.

8. Faßwagen nach einem der vorhergehenden Ansprüche, gekennzeichnet durch eine in der Vorderseite der Bügeleinheit (2) über der unteren Backe (8) vorgesehene Aussparung (22), um einen Durchgang für das Außenrelief (5) des oberen Endes des zu erfassenden Fasses (6) mit großem Durchmesser vorzusehen.

9. Faßwagen nach einem der vorhergehenden Ansprüche, gekennzeichnet durch eine von der Stütze (1) des Wagens getragene Winde (54), die ein aufwickelbares Element (55) steuert, an dem das Betätigungsorgan (10, 13) des Klemmorgans (17) so aufgehängt ist, daß die Übertragung der Last des Fasses (6) zu den Backen (4, 8) eine Spannung des aufwickelbaren Organs (5) hervorruft, die auf das Betätigungsorgan (10, 13) wirkt, um die automatische Klemmung des Klemmorgans (17) aufzuheben, wobei das Faß (6) an dem aufwickelbaren Element (55) aufgehängt ist, während die Steuerung der Winde (54) das kontrollierte Absenken des Fasses (6) entlang der Stütze (1) hervorruft.

10. Faßwagen nach einem der Ansprüche 2 bis 4 und Anspruch 9, dadurch gekennzeichnet, daß das Betätigungsorgan an dem aufwickelbaren Element (55) über einen Ansatz (59) der Stange (10) und einen an den Schubhebel (13) so angelenkten Bügel (60) so aufgehängt ist, daß die Spannung des aufwickelbaren Elements (55) eine Relativverschiebung des Ansatzes (59) und des Bügels (60) hervorruft, die die Klemmung des Klemmorgans (17) aufhebt.
